# EUROPÄISCHE PATENTANMELDUNG

(11) **EP 2 407 513 A1**
(43) Veröffentlichungstag der Anmeldung: **18.01.2012**
(21) Anmeldenummer: 11171017.4
(22) Anmeldetag: 22.06.2011
(51) Int. Cl.: C08L 61/24

(54) **Wässrige modifizierte Harnstoffharzmischung, Verfahren zu deren Herstellung und deren Verwendung zum Tränken von saugfähigem Trägermaterial, sowie unter Verwendung der Harnstoffharzmischung hergestelltes Verbundmaterial**

(30) Priorität: 23.06.2010 EP 10167007
(71) Anmelder: BASF SE, 67056 Ludwigshafen (DE)
(72) Erfinder: Lunkwitz, Ralph, 67434 Neustadt (DE)

(57) **Zusammenfassung**

Wässrige Harnstoffharzmischung mit einem Gehalt an Harz im Bereich von 40 bis 70 Gew.-% bezogen auf die wässrige Harnstoffharzmischung, wobei im Harz Harnstoff und Formaldehyd in einem Molverhältnis von 1 : 1,3 bis 1 : 2,0 vorliegen und das Harz 1 bis 5 Gew.-% bezogen auf die wässrige Harnstoffharzmischung Polyethylenglykol mit einer mittleren Molmasse von 200 bis 1500, und gegebenenfalls eine Komponente M, ausgewählt aus der Gruppe bestehend aus M1) Diethylenglykol, M2) Glyzerin und M3) Caprolactam, enthält.

## Beschreibung

Die vorliegende Erfindung betrifft eine wässrige Harnstoffharzmischung mit einem Gehalt an Harz im Bereich von 40 bis 70 Gew.-% bezogen auf die wässrige Harnstoffharzmischung, wobei im Harz Harnstoff und Formaldehyd in einem Molverhältnis von 1 : 1,3 bis 1 : 2,0 vorliegen und das Harz 1 bis 5 Gew.-% bezogen auf die wässrige Harnstoffharzmischung Polyethylenglykol mit einer mittleren Molmasse von 200 bis 1500, und gegebenenfalls eine Komponente M, ausgewählt aus der Gruppe bestehend aus M1) Diethylenglykol, M2) Glyzerin und M3) Caprolactam, enthält..

Ferner betrifft die Erfindung ein Verfahren zur Herstellung einer wässrigen Harnstoffharzmischung und deren Verwendung zum Tränken von saugfähigem Material, sowie das erhältliche Imprägnat, ein Verfahren zur Herstellung eines Verbundmaterials unter Verwendung dieses Imprägnats sowie das so erhältliche Verbundmaterial.

DE-A 38 14 292 schlägt vor, zumindest partiell mit Alkoholen mit 2 bis 6 C-Atomen oder auch mit Glykolen, beispielsweise Polyethylenglykol, veretherte MelaminFormaldehyd-Kondensate als Tränkharze zu verwenden. Harnstoff-Formaldehydharz wird nicht offenbart.

WO 2005/095514 (BASF Aktiengesellschaft) beschreibt eine wässrige Melaminharzmischung mit mehrwertigen Alkoholen, 2-(2-Phenoxyethoxy)-ethanol) und/oder Polyethylenglycol und gegebenenfalls Caprolactam als Modifizierungsmittel und deren Verwendung zum Tränken von saugfähigem Papier. Harnstoff-Formaldehydharz wird nicht offenbart.

US 2,920,984 beschreibt eine Mischung aus, unter anderem, Glyzerin, Harnstoff-Formaldehyd-Harz und Wasser zum Tränken von fasrigem Zellulosematerial. Polyethylenglykol mit einer mittleren Molmasse von 200 bis 1500 wird nicht offenbart.

Wässrige Harnstoffharzmischungen werden in der Technik auch als "UF Leime" oder "Tränkharze" bezeichnet.

Die im Stand der Technik vorgestellten Tränkharze sowie die daraus hergestellten Imprägnate (in der Technik auch Tränkharzfilme oder Dekorpapiere genannt) lassen noch Raum für Verbesserungen.

Es besteht nach wie vor Bedarf Imprägnate aus Harnstoffharzmischungen und damit getränktem Material, zum Beispiel Dekorpapiere, weniger spröde zu machen und somit die Rissbildung in dem Dekorpapier zu reduzieren.

Der Erfindung lag daher die Aufgabe zugrunde, eine wirtschaftlich attraktive Harnstoffharzmischung und deren Herstellweise aufzufinden, die sich zum Tränken von saugfähigem Material und zur Herstellung von Imprägnaten (zum Beispiel Dekorpapieren oder Tränkharzfilmen) mit geringer Sprödigkeit und geringer Rissbildung, eignet.

Es wurde daher die in den Ansprüchen definierte wässrige Harnstoffharzmischung gefunden sowie ein Verfahren zur Herstellung einer wässrigen Harnstoffharzmischung und deren Verwendung zum Tränken von saugfähigem Material, sowie das erhältliche Imprägnat, ein Verfahren zur Herstellung eines Verbundmaterials unter Verwendung dieses Imprägnats sowie das so erhältliche Verbundmaterial.

Die wässrige Harnstoffharzmischung hat einem Gehalt an Harz im Bereich von 40 bis 70 Gew.-% , vorzugsweise 40 bis 60 Gew.-%, jeweils bezogen auf die wässrige Harnstoffharzmischung.

Das Harz der wässrigen Harnstoffharzmischung hat ein Molverhältnis von Harnstoff zu Formaldehyd von 1 : 1,3 bis 1 : 2,0, vorzugsweise von 1 : 1,45 bis 1 : 1,8.

Die wässrige Harnstoffharzmischung enthält 1 bis 5 Gew.-%, vorzugsweise 1 bis 3 Gew.-%, bezogen auf die wässrige Harnstoffharzmischung, Polyethylenglykol mit einer mittleren Molmasse von 200 bis 1500, vorzugsweise einer mittleren Molmasse von 300 bis 1000, besonders bevorzugt, einer mittleren Molmasse von 300 bis 600 und gegebenenfalls eine Komponente M, ausgewählt aus der Gruppe bestehend aus M1) Diethylenglykol, M2) Glyzerin und M3) Caprolactam.

Die wässrige Harnstoffharzmischung enthält gegebenenfalls 1 bis 4 Gew.-%, vorzugsweise 1 bis 3 Gew.-% Komponente M1 (Diethylenglycol), jeweils bezogen auf die wässrige Harnstoffharzmischung.

Die erfindungsgemäße wässrige Harnstoffharzmischung enthält gegebenenfalls 1 bis 4 Gew.-%, vorzugsweise 1 bis 3 Gew.-% Komponente M2 (Glycerin), jeweils bezogen auf die wässrige Harnstoffharzmischung.

Ferner enthält die erfindungsgemäße wässrige Harnstoffharzmischung 0 bis 4 Gew.-% Caprolactam (Komponente M4), bezogen auf die wässrige Harnstoffharzmischung.

Kombinationen der Komponenten M1 bis M3 sind ebenfalls möglich.

Besonders bevorzugt enthält die erfindungsgemäße wässrige Harnstoffharzmischung kein Caprolactam.

Eine besonders bevorzugte erfindungsgemäße wässrige Harnstoffharzmischung enthält 1 bis 3 Gew.-% Polyethylenglykol mit einer mittleren Molmasse von 200 bis 1500 und 1 bis 3 Gew.-% Komponente M1) (Diethylenglykol), jeweils bezogen auf die wässrige Harnstoffharzmischung.

Neben dem Harnstoffharz, dem Polyethylenglykol mit einer mittleren Molmasse von 200 bis 1500, und gegebenfalls der Komponente M kann die erfindungsgemäße wässrige Harnstoffharzmischung weitere Zusatzstoffe in einer Menge von jeweils kleiner 1 Gew.-% bezogen auf die wässrigen Harnstoffharzmischung enthalten, zum Beispiel Salze organischer Säuren, Amine, Ethanolamine.

Die Summe aller Komponenten Harnstoffharz, Polyethylenglykol mit einer mittleren Molmasse von 200 bis 1500 und gegebenenfalls Komponente M und gegebenenfalls weitere Zusatzstoffe und Wasser der wässrigen Harnstoffharzmischung beträgt 100 Gew.-%.

Ferner betrifft die Erfindung ein Verfahren zur Herstellung der wässrigen Harnstoffharzmischung, wobei man Harnstoff und Formaldehyd in einem Molverhältnis im Bereich von 1 : 1,3 bis 1 : 2,0, vorzugsweise im Bereich von 1 : 1,45 bis 1 : 1,8 in einem wässrigen Medium, vorzugsweise Wasser, bei einem pH-Wert von 4 bis 8 und bei einer Temperatur im Bereich von von 60 bis 110 °C umsetzt und die Mischung mit 1 bis 5 Gew.-%, bezogen auf die wässrige Harnstoffharzmischung, Polyethylenglykol mit einer mittleren Molmasse von 200 bis 1500 und gegebenenfalls einer Komponente M, ausgewählt aus der Gruppe bestehend aus M1) Diethylenglykol, M2) Glyzerin und M3) Caprolactam, versetzt.

Üblicherweise stellt man danach den pH-Wert der Mischung auf ca. 7,8 bis 8 ein und kühlt die Mischung auf Raumtemperatur ab.

Die Komponenten Polyethylenglykol mit einer mittleren Molmasse von 200 bis 1500 und gegebenenfalls M1) bis M3) können allerdings auch alle zusammen zu Anfang der oben beschriebenen Umsetzung präsent sein oder es kann nur ein Teil dieser Komponenten zu Anfang der Reaktion präsent sein, und der Rest der Komponenten kann zu jedem Zeitpunkt während der Reaktion, also während die Temperatur des Reaktionsgemisches im Bereich von 60 bis 110 °C liegt, in einer Menge von 1 bis 5 Gew.-%, vorzugsweise 1 bis 3 Gew.-%, jeweils bezogen auf die wässrige Harnstoffharzmischung, auf einmal oder portionsweise zudosiert werden.

Harnstoff wird üblicherweise in fester Form eingesetzt. Formaldehyd kommt üblicherweise in Form konzentrierter wässriger Lösungen, beispielsweise als 30 bis 60-gewichtsprozentige wässrige Lösung, bevorzugt als 35 bis 55-gewichtsprozentige Lösung, zum Einsatz.

Die Erfindung betrifft ferner die Verwendung der wässrigen Harnstoffharzmischung zum Tränken von saugfähigem Material, vorzugsweise saugfähigem flächigen Material, besonders bevorzugt saugfähigem dünnem flächigen Material, beispielsweise von Papier, wie Papierbahnen, Papierbögen, Vliesstoffen oder anderen, dem Fachmann geläufigen Geweben und Gewirken. Bevorzugt kann die wässrige Harnstoffharzmischung zur Herstellung von Dekorpapieren, vorzugsweise für Möbelanwendungen oder auch für Laminatfußböden, die beispielsweise mit einer Oberflächenkomponente wie Pigmenten versetzt sind, verwendet werden.

Die Erfindung betrifft ferner ein Imprägnat, das dadurch erhältlich ist, dass man ein saugfähiges Material mit einer, wie oben definierten, wässrigen Harnstoffharzmischung behandelt und anschließend trocknet.

Vorzugsweise ist das saugfähige Material flächig, besonders bevorzugt ist es ein dünnes, saugfähiges flächiges Material, beispielsweise Papier, wie Papierbahnen, Papierbögen, Vliesstoffe oder andere, dem Fachmann bekannte Gewebe und Gewirke.

Die Behandlung des saugfähigen Materials, zum Beispiel durch Auftragung der wässrigen Harnstoffharzmischung, geschieht auf dem, dem Fachmann bekannten Wege, zum Beispiel per Tränken, Walzen oder Rakeln.

Die Trocknung des mit der wässrigen Harnstoffharzlösung imprägnierten saugfähigen Materials findet bei dem Fachmann bekannten Bedingungen, beispielsweise bei einer Temperatur im Bereich von 80 bis 150 °C, statt. In der Regel enthalten die so erhältlichen Imprägnate, vorzugsweise Dekorpapiere, Harnstoffharz im Bereich von 50 bis 120 g/m², bezogen auf das trockene Harnstoffharz ("Flächenauftragsgewicht"). Die Restfeuchte so erhältlicher Imprägnate liegt in der Regel im Bereich von 6 bis 8 Gew.-%, bezogen auf das getrocknete Imprägnat.

Weiterhin betrifft die Erfindung ein Verfahren zur Herstellung eines Verbundmaterials, wobei man ein, wie oben beschriebenes, Imprägnat unter Wärme und Druck auf ein Trägermaterial (auch "Substrat" genannt) aufbringt. In einem gut geeigneten Verfahren bringt man das, wie oben beschrieben erhältliche, Imprägnat unter erhöhtem Druck, beispielsweise 1 bis 100 bar, bevorzugt 10 bis 50 bar und besonders bevorzugt 15 bis 25 bar und bei einer Temperatur im Bereich von 60 bis 300 °C mit dem Substrat miteinander in Kontakt.

Als Substrat eigenen sich alle dem Fachmann bekannten, vorzugsweise flächigen, festen Gegenstände aus diversem Material, zum Beispiel Platten. Bevorzugte feste Substrate sind flächig und enthalten Lignocellulose, beispielsweise Holz, Flachs, Stroh. Ganz besonders gut geeignete Substrate sind Platten aus mit Aminoplastharz und/oder Isocyanaten, beispielsweise PMDI, gebundenen Holzspänen oder Holzfasern, zum Beispiel mitteldichte Faserplatten (Medium Density Fiber Boards, MDF) oder hochdichte Faserplatten (High Density Fiber Boards, HDF).

Weiterhin betrifft die Erfindung ein Verbundmaterial, erhältlich wie oben beschrieben. Ein bevorzugtes Verbundmaterial enthält die Schichten (i) Substrat, vorzugsweise aus mit Aminoplastharz und/oder Isocyanaten, beispielsweise PMDI, gebundenen Holzspänen oder Holzfasern, Flachsfasern, Strohfasern, zum Beispiel mitteldichte Faserplatten (Medium Density Fiber Boards, MDF) oder hochdichte Faserplatten (High Density Fiber Boards, HDF) und (ii) ein auf mindestens eine Seite, bevorzugt eine Seite, des Substrats aufgebrachte Dekorpapierschicht.

Üblicherweise bildet das Substrat (i) im Verbundmaterial den dicksten Bestandteil und üblicherweise sind die Schichten (ii) dünne, papierblattstarke Schichten.

### Beispiele

### 1. Herstellung der wässrigen Harnstoffharzmischung

### 1.a Herstellung der wässrigen Harnstoffharzmischung Nr. 1a

Wässriger Formaldehydlösung (40 Gew.-%ig) und Harnstoff , in Mengen wie in folgender Tabelle 1 aufgeführt, wurden vorgelegt und auf 90 °C aufgeheizt und bei pH-Werten, welche im Bereich von 4 bis 8 liegen 4 h lang umgesetzt. Danach wurde die in Tabelle 1 aufgeführte Menge Polyethylenglykol der Molmasse 200 bis 1500 der Mischung hinzugefügt und die entstandene Mischung wurde nach 20 Minuten durch externe Kühlung abgekühlt.

Die so erhaltene Mischung wurde wie unten beschrieben weiterverwendet.

**Tabelle 1: Einsatzstoffe für 1a**

| | |
|---|---|
| Wässriger Formaldehydlösung, 40 Gew.-%ig | 2,02 kg |
| Harnstoff (fest) | 1,08 kg |
| Polyethylenglykol [1] | 78,5 g |

| | |
|---|---|
| [1] Mittlere Molmasse von 200 bis 1500 | |

### 1.b Herstellung der wässrigen Harnstoffharzmischung Nr. 1b (Vergleich)

Die Einsatzstoffe, wie in Tabelle 1 dargestellt, wurden wie für 1a oben beschrieben, umgesetzt, allerdings ohne Zusatz von Polyethylenglycol.

Die so erhaltene Harnstoffharzmischung Nr. 1b wurde wie unten beschrieben weiterverwendet.

### 2. Herstellung der Harzflotte und der Imprägnate

Mit den entsprechenden wässrigen Harnstoffharzmischungen 1a und 1b wurden wie folgt Imprägnate (Dekorpapiere) per "Laborhandimprägnierung" hergestellt:
Zur wässrigen Harnstoffharzmischung 1a oder 1b wurden jeweils 0,8 Gew.-% Härter H 423 der BASF SE, 5 Gew.-% Wasser und 0,05 Gew.-% Kauropal® 933 (nichtionisches Tensid der BASF SE) als Netzmittel, jeweils bezogen auf die resultierende Mischung, auch "Harzflotte" genannt, dazugegeben. Es wurden die entsprechenden Harzflotten 1a und 1b erhalten.

Die jeweilige Harzflotte 1a oder 1b wurde in eine Blechwanne gefüllt (Handiprägnierbad). Das jeweils zu imprägnierende Dekorpapier (70 g /m²) wurde in das Handimprägnierbad gelegt und nahm die Harzflotte auf.

Danach wurde die Harzaufnahme des jeweiligen Papiers, wie üblich per Drahtrakeln, eingestellt.

Das jeweilige nasse Dekorpapier wurde dann in einen Umlufttrockenschrank gebracht und bei 120 °C 2 Minuten lang getrocknet.

Per Wägung wurde festgestellt, wie viel Harz aufgetragen wurde. In der Regel kann der oben beschriebene Prozess einmal oder auch mehrmals wiederholt werden, um das gewünschte Flächenauftragsgewicht von etwa 130g/m² zu erreichen.

Die Restfeuchte des jeweiligen Dekorpapiers lag im Bereich von 6 bis 8 Gew.-%, bezogen auf das getrocknete Papier.

### 3. Herstellung der mit den jeweiligen Imprägnaten (Dekorpapieren) versehenen Prüfkörper

Das jeweilige Imprägnat (Dekorpapier) wurde in einer Laborpresse bei 210 °C, einem Pressdruck von 25 bar und einer Presszeit von 18 Sekunden auf eine HDF-Platte (ca. 16 mm Dicke, 40 cm x 40 cm) oberseitig aufgepresst Auf der Rückseite der HDF-Platte wurde ein handelsüblicher "Gegenzugsfilm" aufgelegt um den Verzug des Prüfkörpers zu vermeiden.

Die Prüfung auf Rissbildung (wie unten beschrieben) erfolgte in der Regel an einem Prüfkörper, welcher einen Tag lang bei Raumtemperatur gelagert wurde.

Prüfkörper die mit Dekorpapieren unter Verwendung der erfindungsgemäßen Harzflotte 1a hergestellt wurden, wurden mit "Stufe 5" (siehe unten) bewertet, sie zeigten keine Risse.

Prüfkörper die mit Dekorpapieren unter Verwendung der Harzflotte 1b (ohne Polyethylenglykol) zum Vergleich hergestellt wurden, wurden mit "Stufe 4" (siehe unten) bewertet, sie zeigten 2 bis 4 Risse.

### 4. Prüfmethode auf Risse

Die Prüfung der Rissempfindlichkeit geschah in Anlehnung an die Norm EN 14323. Diese bestimmt die Fähigkeit des Prüfkörpers, bzw. des entsprechenden Dekorpapierts, einer Rissbildung bei trockener Hitze zu widerstehen.

Es wurde jeweils ein oben beschriebener Prüfkörper welcher eine Temperatur von ca. 25 °C (Umgebungstemperatur) hatte in einen Umluft-Wärmeschrank mit einer Temperatur von 80 °C eingebracht, dort 24 Stunden bei 80 C gelassen und anschließend 24 Stunden in einer Umgebung von 25 °C und 50 % relativer Luftfeuchte gelagert. Die mit dem Dekorpapier versehenen Oberfläche des jeweiligen Prüfkörpers wurde dann durch eine Lupe mit sechsfacher Vergrößerung auf Anzahl und Größe von Rissen untersucht.

In der Bewertungsskala bedeutet: Stufe 5" keine Risse", Stufe 4 "vereinzelte Haar-Risse", Stufe 3 "Haar-Risse über die gesamte Oberfläche regellos verteilt", Stufe 2 "wie in Stufe 3, plus ein bis zwei kleine Oberflächenrisse < 25 mm Länge", Stufe 1 "mehrere Oberflächenrisse über die gesamte Oberfläche verteilt".

## Patentansprüche

1. Wässrige Harnstoffharzmischung mit einem Gehalt an Harz im Bereich von 40 bis 70 Gew.-% bezogen auf die wässrige Harnstoffharzmischung, wobei im Harz Harnstoff und Formaldehyd in einem Molverhältnis von 1 : 1,3 bis 1 : 2,0 vorliegen und das Harz 1 bis 5 Gew.-% bezogen auf die wässrige Harnstoffharzmischung Polyethylenglykol mit einer mittleren Molmasse von 200 bis 1500, und gegebenenfalls eine Komponente M, ausgewählt aus der Gruppe bestehend aus M1) Diethylenglykol, M2) Glyzerin und M3) Caprolactam, enthält.

2. Wässrige Harnstoffharzmischung nach Anspruch 1, wobei die Komponente M ausgewählt wird aus der Gruppe bestehend aus M1) 1 bis 4 Gew.-% Diethylenglykol, M2) 1 bis 4 Gew.-% Glyzerin und M3) 0 bis 4 Gew.-% Caprolactam, jeweils bezogen auf die wässrige Harnstoffharzmischung.

3. Wässrige Harnstoffharzmischung nach den Ansprüchen 1 bis 2, die 1 bis 3 Gew.-% Polyethylenglykol mit einer mittleren Molmasse von 300 bis 600 enthält.

4. Verfahren zur Herstellung einer wässrigen Harnstoffharzmischung, **dadurch gekennzeichnet, dass** man Harnstoff und Formaldehyd in einem Molverhältnis von 1: 1,3 bis 1 : 2,0 in einem wässrigen Medium bei einem pH-Wert von 4 bis 8 und bei einer Temperatur im Bereich von 60 bis 110°C umsetzt und die Mischung mit 1 bis 5 Gew.-%, bezogen auf die wässrige Harnstoffharzmischung, Polyethylenglykol mit einer mittleren Molmasse von 200 bis 1500 und gegebenenfalls einer Komponente M, ausgewählt aus der Gruppe bestehend aus M1) Diethylenglykol, M2) Glyzerin und M3) Caprolactam versetzt.

5. Verwendung der in den Ansprüchen 1 bis 4 definierten Harnstoffharzmischung zum Tränken von saugfähigem Material.

6. Imprägnat, dadurch erhältlich, dass man ein saugfähiges Material mit einer wie in den Ansprüchen 1 bis 4 definierten wässrigen Harnstoffharzmischung behandelt und anschließend trocknet.

7. Verfahren zur Herstellung eines Verbundmaterials, wobei man ein Imprägnat, wie in Anspruch 6 definiert, unter Wärme und Druck auf ein Trägermaterial aufbringt.

8. Verbundmaterial, erhältlich nach einem Verfahren, wie in Anspruch 7 definiert.
